# EUROPEAN PATENT APPLICATION

(11) **EP 4 826 989 A1**
(43) Date of publication of application: **21.10.2026**
(21) Application number: 23961183.3
(22) Date of filing: 15.12.2023
(51) Int. Cl.: H02S 20/00, A01G 9/14

(54) **GREENHOUSE SOLAR POWER GENERATION APPARATUS**

(71) Applicant: Sunny Rich Agric. & Biotech Co., Ltd., Taipei City (TW)
(72) Inventor: CHEN, Kuei-Kuang, Taipei City Taiwan (CN)
(74) Representative: Lang, Christian
(86) International application number: PCT/CN2023/139117
(87) International publication number: WO 2025/123325

(57) **Abstract**

The present invention relates to a greenhouse solar power generation apparatus comprising at least one greenhouse body, a plurality of solar modules, a plurality of posts, and at least one actuating device. The greenhouse body includes a roof frame. A roof material is disposed on the roof frame. The plurality of solar modules includes a plurality of assembling frames. The assembling frames are disposed on an upper end of an outer side of a top portion of the greenhouse body along a front/rear direction and are provided with a shaft coupling portion. A plurality of solar panels is disposed in series on one of the assembling frames to form a solar module. The plurality of solar modules is connected in series to move jointly. Lower ends of the posts are connected to the greenhouse body. Upper ends of the posts are connected to the shaft coupling portion of the assembling frames. The actuating device is interlocked with the solar modules and can drive the solar modules to rotate, such that the solar panels are perpendicular to the ground, or have a minimum wind resistance, or are at a preferred incident angle of sunlight, or are horizontally arranged relative to the ground. Thus, the present invention can have better light transmittance and power-generating efficiency.

## Description

### Technical Field

The present invention relates to the technical field of solar power generation systems and, more particularly, to a greenhouse solar power generation apparatus that can improve greenhouse solar power generation efficiency and appropriate light transmittance.

### Background Technique

A greenhouse can moderately block external wind and rain and can provide a better growth environment for the organisms in the greenhouse. The greenhouse generally has a base frame comprised of several vertical frames and several horizontal frames. A semicircular or triangular top frame is disposed on top of the base frame, and various roof materials, such as agricultural films, meshes, and transparent panels, are disposed on the outside of the base frame and on the top frame. Functions including appropriate light transmittance, air permeability, and shielding rate function can be provided under the greenhouse.

In order to improve the efficiency of the greenhouse, currently, solar panels can be installed under or above the top frame of the greenhouse. Although the solar panels installed under the top frame can block external wind and rain, the external sunlight must first penetrate the roof material of the top frame and then project onto the light receiving surfaces of the solar panels that can receive light and generate power, causing light energy attenuation and affecting the power generation efficiency. Furthermore, when the solar panels are installed above the greenhouse, the solar panels are generally flat on the top frame, or a solar panel rack is installed on the top frame, and the solar panels may be installed obliquely relative to the ground.

However, the aforementioned structure will form a shaded dark area under the solar panels and affect the growth of organisms in the dark area of the greenhouse. Furthermore, the solar panels have a fixed inclination and cannot respond to changes in wind force, such that the solar panels could be blown off or damaged under strong winds.

For example, the solar power generation apparatuses disclosed in Taiwan Patents TWI643446, TWI599788, TWM518820, and TWM517476 have an adjustment device disposed below a side of one or more solar panels, and the angle of the solar panels can be adjusted by the adjustment device according to the direction of the sunlight.

However, the aforementioned adjustment device can only drive one or a fixed number of solar panels to change their angles. When more solar panels are required to generate power, more adjustment devices must be installed, which increases costs and is inconvenient to install. Moreover, when the structure is installed above a greenhouse, it will occupy a large space above the greenhouse, and it is still difficult to control the space under the greenhouse to have a good illumination effect.

### Summary of the Invention

The object of the present invention is to provide a greenhouse solar power generation apparatus which can improve the power generation efficiency of solar panels and appropriate light transmittance and enable stable angle adjustment at low cost.

The present invention is a greenhouse solar power generation apparatus comprising: at least one greenhouse body including a roof frame, with a roofing material disposed on the roof frame; a plurality of solar modules including a plurality of assembling frames and a plurality of solar panels, with the assembling frames disposed on an upper end of an outer side of a top portion of the greenhouse body along a front/rear direction and provided with a shaft coupling portion, with the solar panels having light receiving surfaces for receiving light and generating power and disposed in series on one of the assembling frames to form a solar module, and with the plurality of solar modules connected in series to move jointly; a plurality of posts whose lower ends are connected to the greenhouse body and whose upper ends are connected to the shaft coupling portion of the assembling frame; at least one actuating device interlocked with the solar modules and used to drive the solar modules to rotate, enabling the solar panels to be in different angles relative to the ground.

Furthermore, two outer surfaces of the solar panel have a first light receiving surface and a second light receiving surface for receiving light and generating power.

Furthermore, the greenhouse body includes a plurality of columns. A horizontal frame in the front/rear direction is disposed on upper ends of the columns. The roof frame is coupled with the horizontal frame and is disposed on a side of an upper end of the horizontal frame. The posts are vertically disposed on top of the horizontal frame. Bottoms of the posts are fixed to the horizontal frame.

Furthermore, the assembling frame includes a straight upper frame and a straight lower frame which are parallel to each other, a plurality of connecting plates, and a plurality of shaft coupling portions, the upper frame and the lower frame are connected by the connecting plates, and installation spaces for mounting the plurality of serially disposed solar panels are provided between the upper frame, the lower frame, and the connecting plates, a pivot seat is disposed on the upper end of the post, the shaft coupling portions are disposed on central positions of front and rear ends of the assembling frame and are coupled with the pivot seats, and the shaft coupling portions of adjacent assembling frames are coaxially connected in series to enable the plurality of assembling frames to rotate jointly.

Furthermore, an assembling portion protrudes from a side of the connecting plate, the shaft coupling portion is a straight rod, and the shaft coupling portion is coupled with a plurality of assembling portions and is disposed on a side corresponding to the light receiving surface of the solar panel.

Furthermore, at least one light-reflecting shielding reflective material is disposed below the roof frame of the greenhouse body.

Furthermore, at least one connecting member is further included, with the connecting member disposed between two adjacent solar modules.

Furthermore, the assembling frame includes an upper frame, a lower frame, a plurality of vertical frames, and a plurality of shaft coupling portions, the upper frame and the lower frame are arranged in parallel on upper and lower sides of the solar panel respectively, and a plurality of solar panels are disposed consecutively between the upper frame and the lower frame, the vertical frame is disposed vertically relative to the upper frame and the lower frame, the shaft coupling portions are disposed on the vertical frames on two sides of the solar module along an axial direction, the connecting member is disposed between the vertical frames of two adjacent solar modules, and two sides of the connecting member abut against and are fixedly connected with two vertical frames.

Furthermore, a connecting portion is disposed on a periphery of the solar panel, the connecting portion is provided with a mounting hole, a through-hole is provided on the vertical frame corresponding to a position of the mounting hole of the solar panel, and a coupling element extends through the through-hole and the mounting hole to fix the vertical frame to the solar panel, and upper and lower ends of the vertical frame are respectively fixed to the upper frame and the lower frame.

Furthermore, a center of the shaft coupling portion has a non-circular through-hole, a supporting platform is disposed on a top end of the post, a bearing is disposed at a center of the supporting platform, the bearing includes a seat and a shaft, the seat is fixed on the supporting platform, the shaft is rotatable in the seat, connecting beams protrude from two ends of the shaft, the bearing includes a plurality of connecting blocks, the connecting block includes a connecting plate coupled with the shaft coupling portion, a coupling beam protrudes from a side of the connecting plate, extends through the through-hole of the shaft coupling portion, and is interlocked with the shaft coupling portion, and the coupling beam has a fitting hole coupled with the connecting beam and jointly rotatable with the shaft.

The solar panels of the present invention allow stable adjustment of the angle of a plurality of serially connected solar module with only one actuating device under assistance of the shaft coupling portion, which reduces the cost and has effects of easy installation, extendable to the required area for receiving light and generating power, and better power generation efficiency.

In a case of a typhoon or other outdoor strong wind conditions, the solar modules can be rotated by the actuating device to allow the solar panels to be at a minimum wind resistance angle or horizontally arranged relative to the ground, and can prevent external strong winds from directly hitting the solar panels, thereby avoiding shifting and damage to the assembling frames, the posts, and the solar panels.

Furthermore, vertical arrangement relative to the ground may be provided at ordinary times. Thus, the solar panels will not substantially block the top of the greenhouse body when viewed from above the greenhouse body, which enables the greenhouse body to maintain desired light transmittance to thereby provide a good growth environment for the organisms that need sunlight below the greenhouse. In the present invention, when sunlight is projected onto the roof material at the top, if the roof material has better light transmittance, most of the light can be projected downward into the greenhouse body, and a portion of the sunlight can be reflected by the roof material to the first light receiving surfaces or the second light receiving surfaces of the solar panels to generate power. Furthermore, when the sun is in different directions in the morning or afternoon, its main emitted light can be projected onto the first light receiving surfaces or displaced to the second light receiving surfaces on the other side. Furthermore, the present invention can be adjusted to a better sunlight incident angle, so the present invention can provide better power generation efficiency when there is sunlight.

### Description of the Accompanying Drawings

FIG. 1 is a partial exploded view of a greenhouse solar power generation apparatus according to a first embodiment of the present invention.
FIG. 2 is a diagram of a plurality of greenhouse solar power generation apparatuses according to the first embodiment of the present invention after assembly.
FIG. 3 is a top view of a plurality of greenhouse solar power generation apparatuses according to the first embodiment of the present invention.
FIG. 4 is a side view of a plurality of greenhouse solar power generation apparatuses according to the first embodiment of the present invention, schematically illustrating reception of light and power generation (showing the sun in a central position).
FIG. 5 is a side view of a plurality of greenhouse solar power generation apparatuses according to the first embodiment, schematically illustrating reception of light and power generation of the present invention (showing the sun in a side position).
FIG. 6 is a side view of a plurality of greenhouse solar power generation apparatuses according to the first embodiment of the present invention, schematically illustrating reception of light and power generation (showing that the roof material is opaque).
FIG. 7 is a side view of a plurality of greenhouse solar power generation apparatuses according to the first embodiment of the present invention, schematically illustrating reception of light and power generation (showing the shielding reflective material in an unfolded state).
FIG. 8 is a side view of a plurality of greenhouse solar power generation apparatuses according to the first embodiment of the present invention with the solar panels rotated to a horizontal position.
FIG. 9 is a top view of a plurality of greenhouse solar power generation apparatuses according to the first embodiment of the present invention with the solar panels rotated to a horizontal position.
FIG. 10 is a schematic diagram of assembling frames and posts according to a second embodiment of the present invention after assembly.
FIG. 11 is a schematic diagram of a plurality of greenhouse solar power generation apparatuses provided with shielding reflective materials to reflect light according to a third embodiment of the present invention.
FIG. 12 is a schematic diagram of a plurality of greenhouse solar power generation apparatuses according to a fourth embodiment of the present invention.
FIG. 13 is a schematic diagram illustrating light reflection of unfolded shielding reflective materials of a plurality of greenhouse solar power generation apparatuses according to the fourth embodiment of the present invention.
FIG. 14 is a diagram of solar modules, posts, an actuating device, and connecting members according to a fifth embodiment of the present invention after assembly.
FIG. 15 is an exploded view of a solar module according to the fifth embodiment of the present invention.
FIG. 16 is a cross-sectional view of the solar module according to the fifth embodiment of the present invention after assembly.
FIG. 17 is an exploded view of the post according to the fifth embodiment of the present invention.
FIG. 18 is an exploded view of the solar modules, the posts, the actuating device, and the connecting members according to the fifth embodiment of the present invention.
FIG. 19 is a schematic diagram of the solar modules, the post, the actuating device, and the connecting member according to the fifth embodiment of the present invention after assembly.
FIG. 20 is a schematic diagram illustrating angle adjustment of the solar module according to the fifth embodiment of the present invention.

Reference numbers: 1 greenhouse body; 11 column; 12 horizontal frame; 13 roof frame; 131 straight strut; 132 cover cloth; 14 roof material; 15 truss; 16 shielding reflective material; 161 partition space; 2 solar module; 21 assembling frame; 211 upper frame; 212 lower frame; 213 connecting plate; 214 installation space; 215 shaft coupling portion; 216 assembling portion; 22 solar panel; 221 first light receiving surface; 222 second light receiving surface; 223 connecting portion; 224 mounting hole; 3 post; 31 pivot seat; 4 actuating device; 41 actuating end; 5 solar module; 50 assembling frame; 51 upper frame; 511 first coupling hole; 52 lower frame; 521 second coupling hole; 53 vertical frame; 531 first through-hole; 532 third coupling hole; 533 fourth coupling hole; 534 fifth coupling hole; 54 coupling element; 55 shaft coupling portion; 551 second through-hole; 552 sixth coupling hole; 6 post; 61 supporting platform; 62 bearing; 621 seat; 622 shaft; 623 connecting beam; 63 connecting block; 631 connecting plate; 632 seventh coupling hole; 633 coupling beam; 634 fitting hole; 7 connecting member; 71 reinforcing frame; 72 eighth coupling hole.

### Embodiments of the Invention

Elements having similar functions in the present invention are designated by the same reference number in the following embodiments. In the description of this application, the meanings of "plurality" and "several" are two or more, unless clearly and specifically defined otherwise.

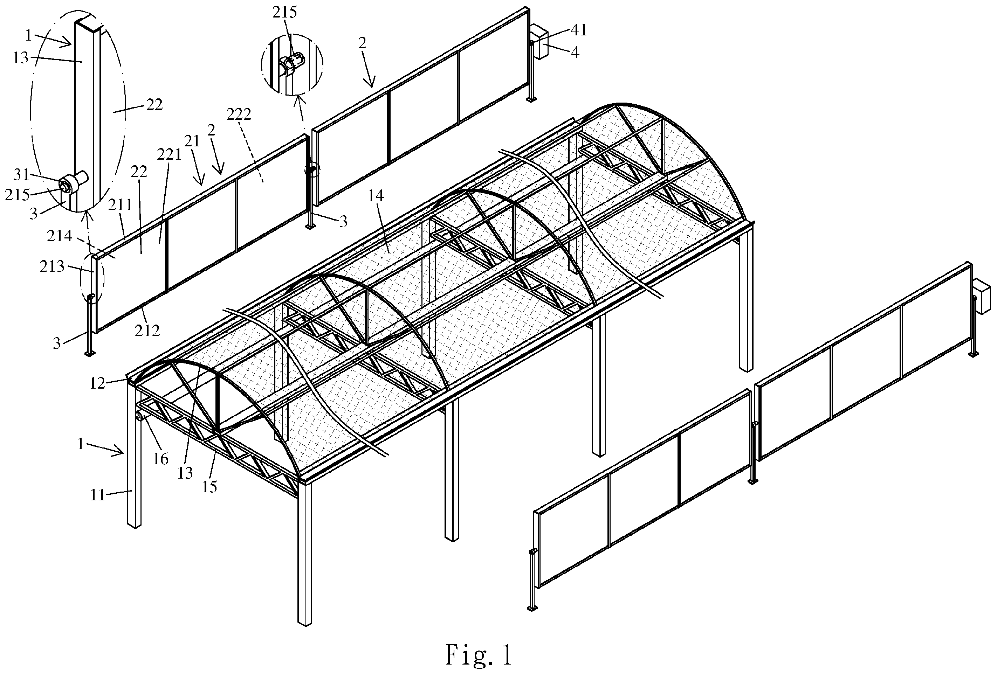

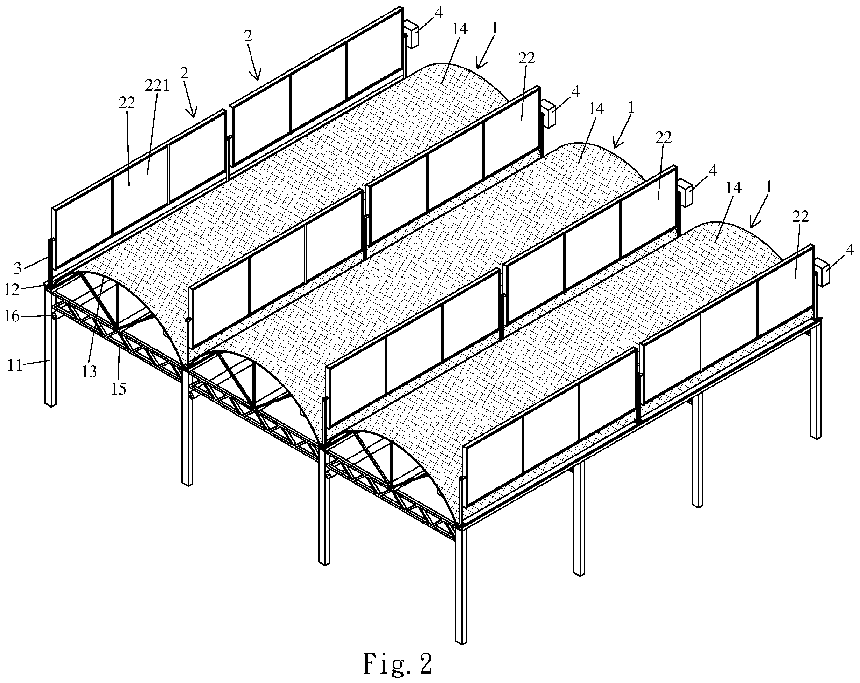

Please refer to FIGS. 1-4. A first embodiment of the present invention comprises at least one greenhouse body 1, a plurality of solar modules 2, a plurality of posts 3, and at least one actuating device 4. The greenhouse body 1 includes a plurality of columns 11 on left and right sides. Horizontal frames 12 in a front/rear direction are disposed on upper ends of the columns 11. The horizontal frame 12 may have a drainage function and includes an upper end having a side coupled with a semicircular roof frame 13. In other embodiments, the roof frame 13 may also have other shapes. Furthermore, a roof material 14 is disposed on the roof frame 13. The roof material 14 may be an agricultural film, a mesh, a transparent board, an opaque board, a light-transmittable material, a translucent material, an opaque material, or other suitable materials. Furthermore, reinforcing trusses 15 are disposed below the roof frame 13. Furthermore, a shielding reflective material 16 that can be unfolded or folded and that can shield and reflect light is disposed below the roof frame 13.

The solar module 2 includes a plurality of assembling frames 21 and a plurality of solar panels 22. The assembly frame 21 is an object including a straight upper frame 211 and a straight lower frame 212 which are parallel to each other, and a plurality of connecting plates 213. The upper frame 211 and the lower frame 212 are connected by the connecting plates 213, and an installation space 214 is provided between the upper frame 211, the lower frame 212, and the connecting plates 213. Furthermore, shaft coupling portions 215 are disposed on central positions of front and rear ends of the assembling frame 21. A plurality of assembling frames 21 is provided in this embodiment, and shaft coupling portions 215 of adjacent assembling frames 21 are coaxially connected in series to enable the plurality of assembling frames 21 to rotate jointly. Furthermore, the solar panel 22 includes two outer surfaces having a first light receiving surface 221 and a second light receiving surface 222 for receiving light and generating power, and are arranged in series in the installation space 214 of the assembling frame 21. Furthermore, one side of the assembling frame 21 has a plurality of consecutively aligned first light receiving surfaces 221, and the opposite side has a plurality of consecutively aligned second light receiving surfaces 222.

The post 3 is vertically disposed on top of the horizontal frame 12. The bottom of the post 3 is fixed to the horizontal frame 12. A pivot seat 31 is disposed on the upper end of the post 3 and is coupled with the shaft coupling portion 215 of the assembling frame 21 of the solar module 2.

The actuating device 4 includes an actuating end 41 coupled with the shaft coupling portion 215 of the assembling frame 21 of the solar module 2 located at the rear side and can drive the solar module 2 located at the rear side to be in a vertical or horizontal position or other suitable angles relative to the ground. The actuating device 4 may have a hydraulic rotating mechanism, a pneumatic rotating mechanism, or a motor mechanism (not shown), or a knob may be provided for manual rotation. Furthermore, the actuating device 4 may have a detection device (not shown) for detecting the direction of sunlight, and the detection result of the detection device may drive the solar module 2 to rotate to an appropriate sunlight incident angle.

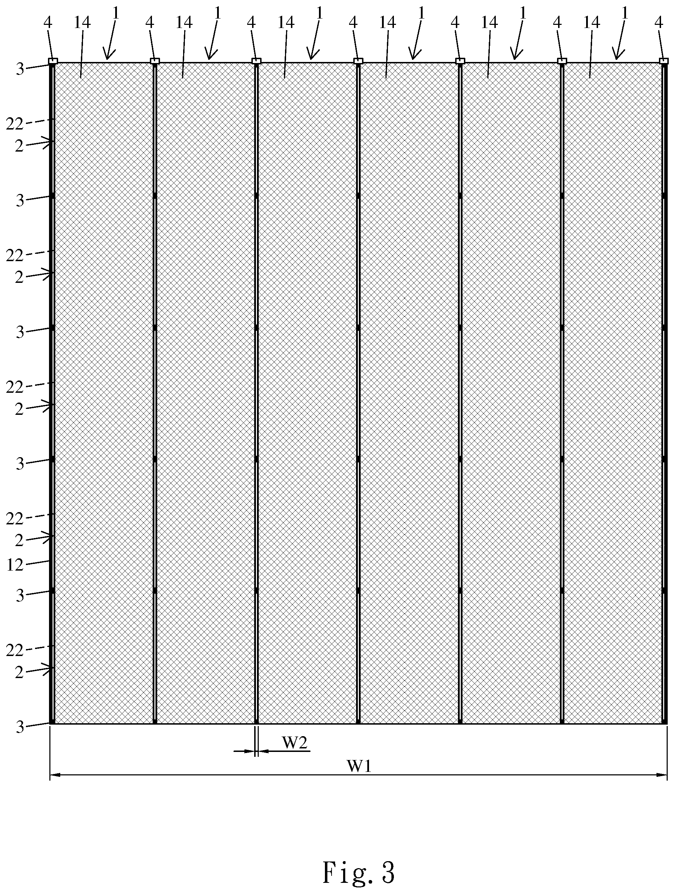

The solar module 2 of the present invention is disposed, by the post 3, on the horizontal frame 12 of the greenhouse body 1 in a position with better support, which can have better installation stability. The solar panel 22 of the present invention may be disposed vertically relative to the ground at ordinary times. Therefore, as shown in FIG3, in this embodiment, when viewed from above the greenhouse body 1, the width of each solar panel 22 is W2, and the total width of the solar panels 22 is W2×6, which is much smaller than the width W1 of each greenhouse body 1. In the case of the same length, the proportion of light shielding by the solar panel 22 is small, and the solar panel 22 is disposed above the associated opaque horizontal frame 12 and will not shield the top of the greenhouse body 1, which can provide the greenhouse body 1 with a light transmittance close to that without the solar panels 22, so as to provide a good growth environment for the plants that need sunlight under the greenhouse.

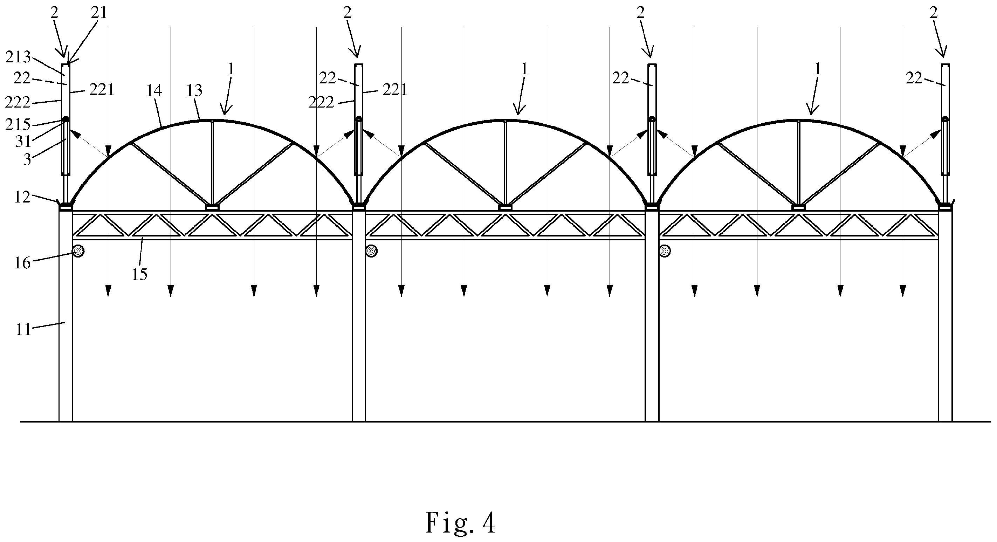

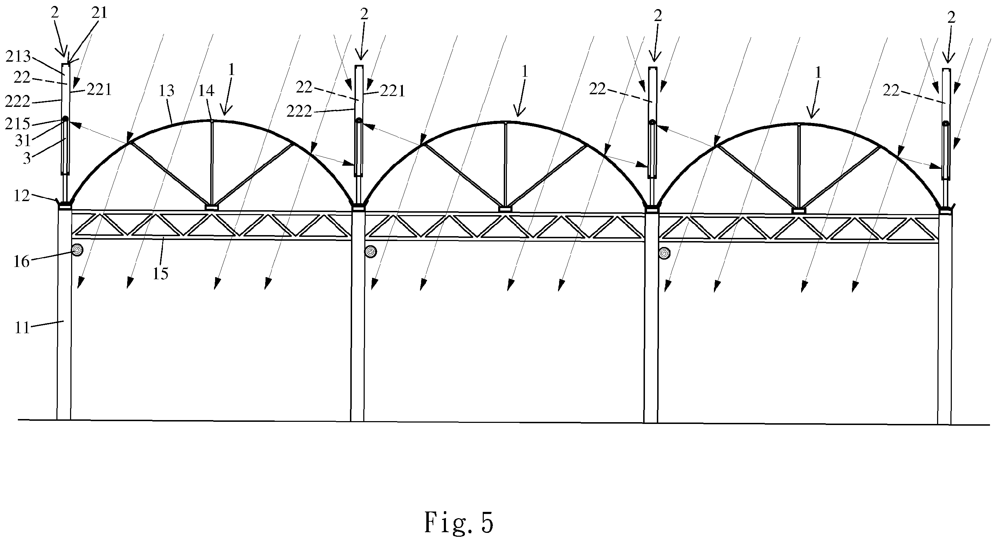

Please refer to FIG. 4 and FIG. 5 which show the states of receiving light and generating power of the present invention when the sun is located above the greenhouse body 1 and on a side of the greenhouse body 1, respectively. When the sunlight is projected onto the roof material 14 at the top, if the roof material 14 has better light transmittance, most of the light can be projected downward into the greenhouse body 1, and a portion of the sunlight can be reflected by the roof material 14 to the first light receiving surface 221 or the second light receiving surface 222 of the solar panel 22 to generate power. Furthermore, when the sun is in different directions in the morning or afternoon, its main emitted light can be projected onto the first light receiving surface 221 or displaced to the second light receiving surface 222 on the other side. Therefore, when there is sunlight, the present invention can receive light and generate power and can receive direct and reflected sunlight to provide better power generation efficiency, and the present invention can have better light transmittance and power generation efficiency. In addition, the present invention can also use an actuating device to shift the solar panels to a better sunlight incident angle (not shown) to enhance the power generation efficiency.

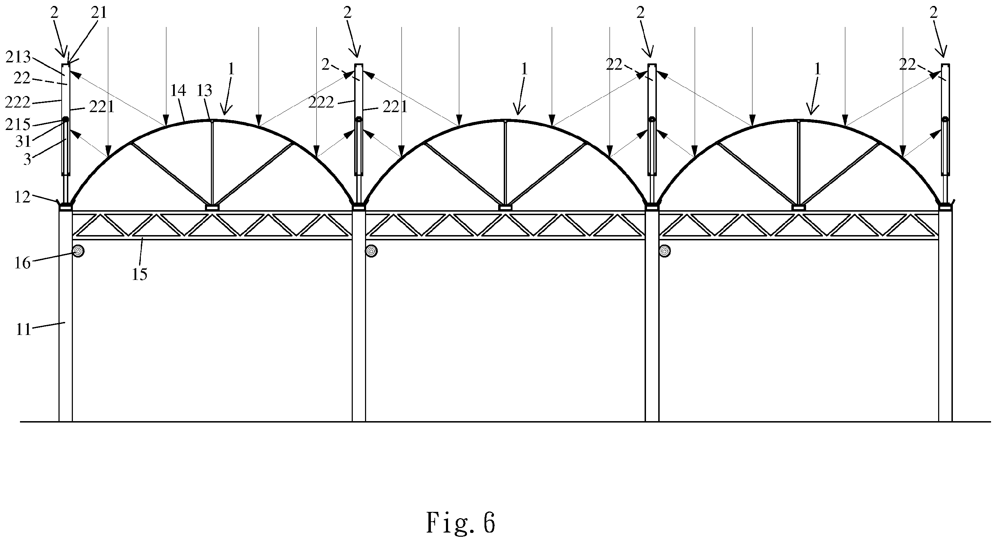

Please refer to FIG. 6. When mushrooms or other organisms that do not require sunlight (not shown) are planted below the greenhouse body 1, the roof material 14 can be made of an opaque and preferably reflective material. Therefore, in addition to directly irradiating the first and second light receiving surfaces 221 and 222 of the solar panels 22 by the external sunlight to generate power, most of the light from the external sunlight irradiating the roof material 14 can be reflected to the first and second light receiving surfaces 221 and 222 of the solar panel 22, thereby having better power generation efficiency.

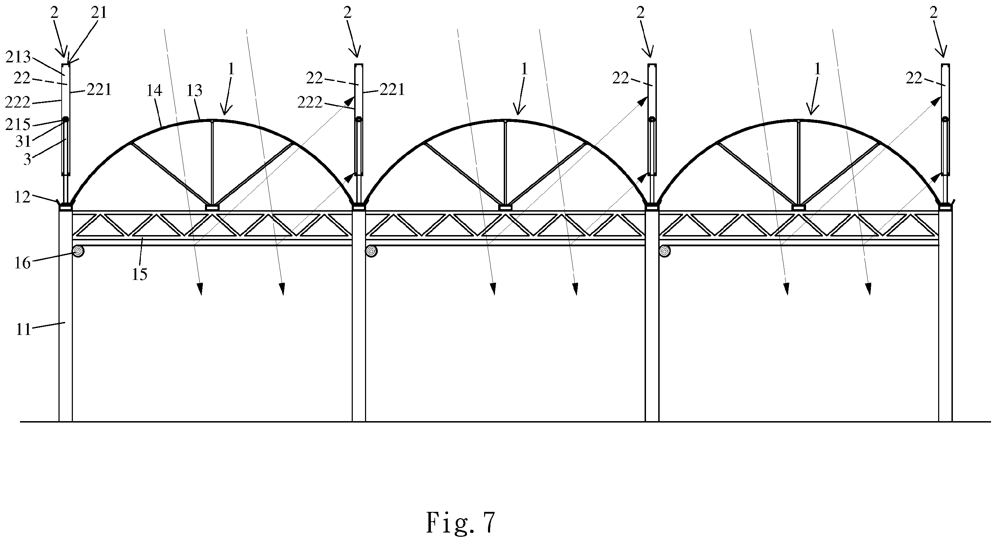

Please refer to FIG. 7. The present invention can unfold the shielding reflective material 16 in the greenhouse body 1 when the sunlight is strong at noon or according to demand. The shielding reflective material 16 can prevent strong light from irradiating the organisms and affecting their growth and can reflect most of the light to the first light receiving surfaces 221 or the second light receiving surfaces 222 of the solar panels 22 thereabove, thereby improving the efficiency of power generation by the reflected light.

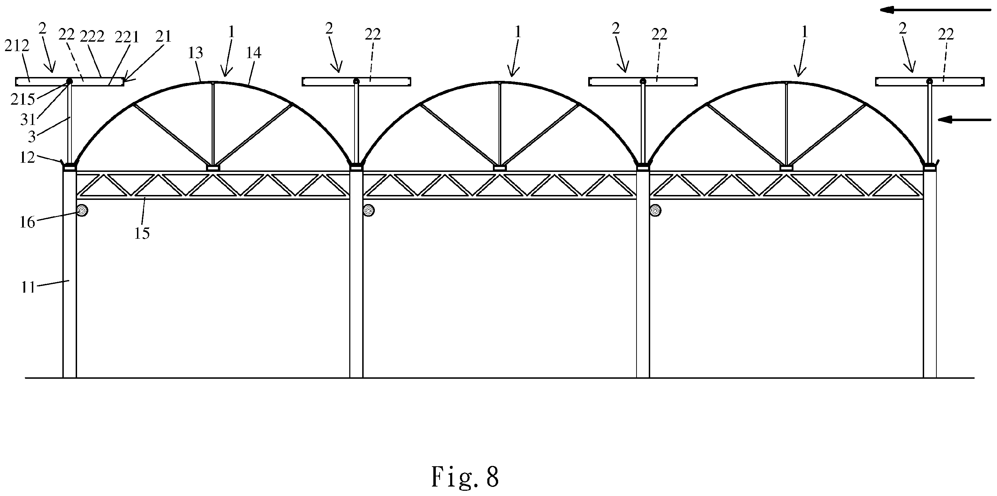

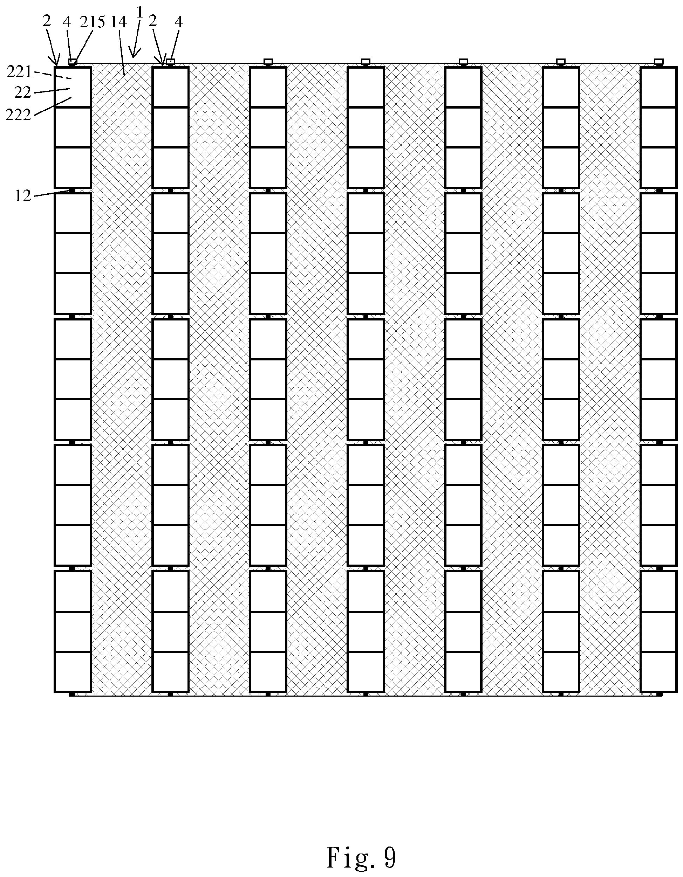

Please refer to FIG. 8 and FIG. 9. In a case of a typhoon or other outdoor strong wind conditions, the present invention may use the actuating device 4 to rotate the shaft coupling portions 215 to allow the solar panels 22 to be at a minimum wind resistance angle or horizontally arranged relative to the ground, and may prevent external strong winds from directly hitting the first light receiving surfaces 221 or the second light receiving surfaces 222, thereby avoiding shifting and damage to the assembling frames 21, the posts 3, and the solar panels 22. The solar panels 22 can also have the effect of shielding the horizontal frame 12 therebelow.

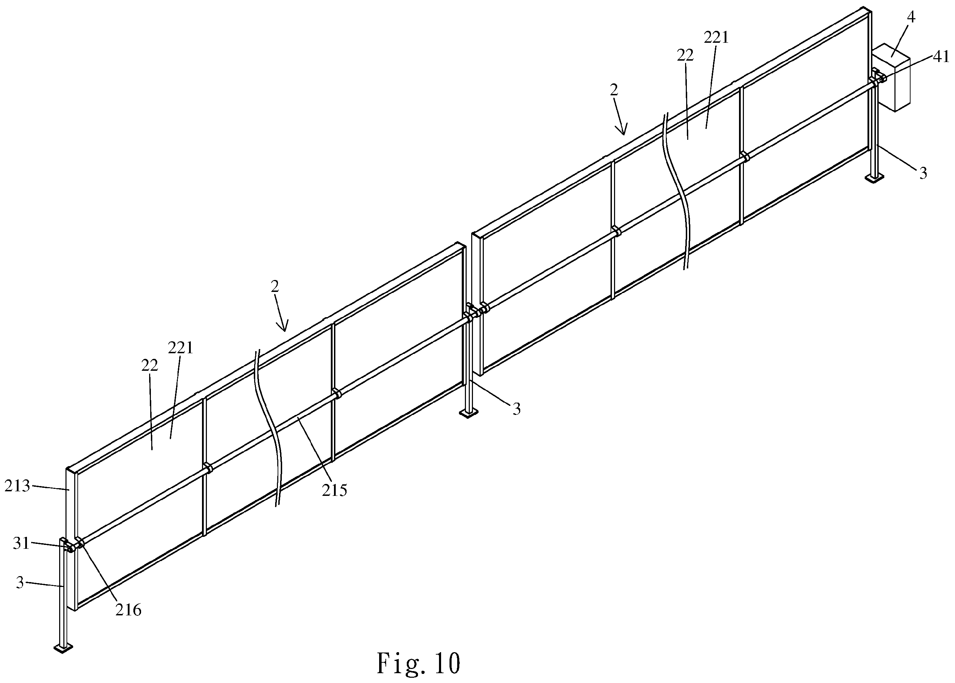

Please refer to FIG. 10 which is a schematic diagram of the structure of the assembling frame 21 according to the second embodiment of the present invention. The main difference between the second embodiment and the first embodiment is that an assembling portion 216 protrudes from a side of the connecting plate 213 of the assembling frame 21, and the shaft coupling portion 215 is a straight rod coupled with the assembling portions 216 of a plurality of assembling frames 21 and is provided on a side of the first light receiving surface 221 of the associated solar panel 22. The shaft coupling portion 215 has an end coupled with the actuating device 4 and can drive each solar module 2 to rotate relative to the ground for vertical or horizontal displacement or other angular movement.

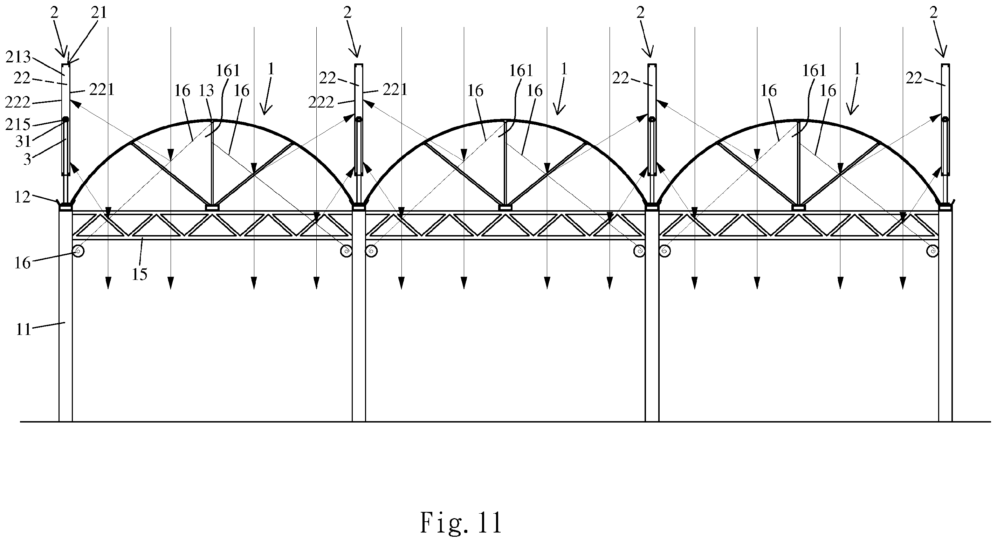

Please refer to FIG. 11 which is a third embodiment of the present invention. The third embodiment is similar to the first embodiment, the difference is that two shielding reflective materials 16 which may be unfolded or folded are disposed below the roof frame 13 of the greenhouse body 1. When the two shielding reflective materials 16 are unfolded, one end is located on a side of the greenhouse body 1, and the other ends are located at different heights in the center of the roof frame 13. When the two shielding reflective materials 16 are unfolded, they may be obliquely disposed relative to the ground, and a breathable partition space 161 is provided between the two shielding reflective materials 16.

The shielding reflective material 16 can be unfolded when the sunlight is strong or according to the needs, and the oblique angle can directly reflect most of the light to the solar panel 22 to have better power generation efficiency. Furthermore, the partition space 161 can enhance the ventilation and non-stifling effect of the greenhouse body.

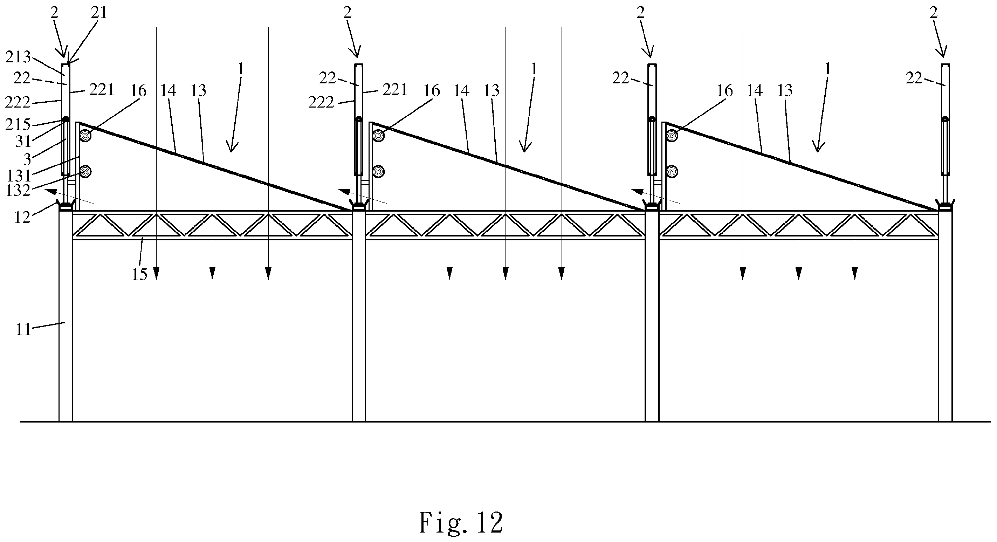

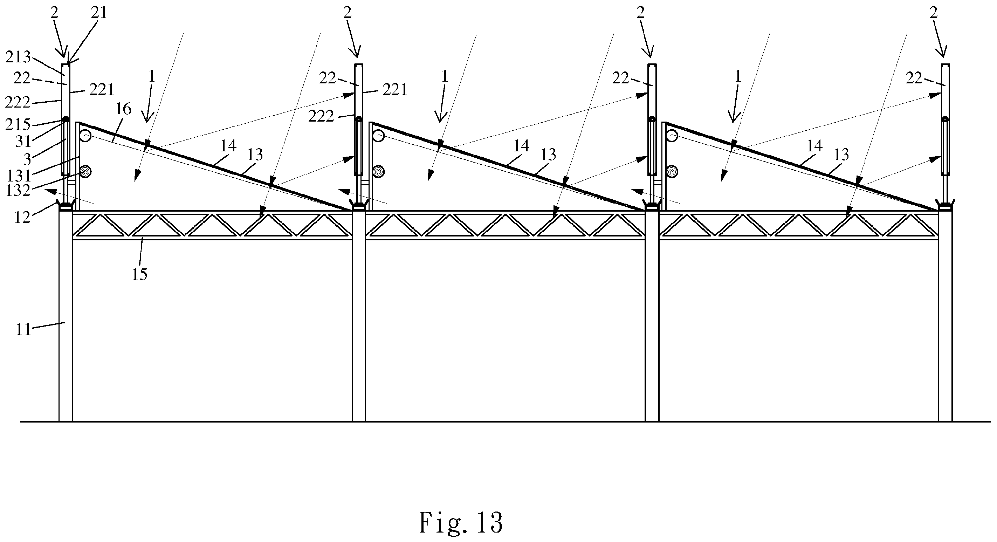

Please refer to FIG. 12 and FIG. 13 showing the fourth embodiment of the present invention. The fourth embodiment is similar to the first embodiment, the difference is that the roof frame 13 is a triangular object, and a straight strut 131 having a side substantially perpendicular to the ground can be coupled with the post 3 to improve the assembling stability of the post 3. Furthermore, a coilable and breathable or an unfoldable and airtight cover cloth 132 can be disposed at the position of the straight strut 131. Furthermore, a shielding reflective material 16 that can be unfolded or folded in a direction approximately parallel to the top of the roof frame 13 is provided. As shown in FIG. 13, the shielding reflective material 16 can be unfolded when the sunlight is strong or according to the needs and can be obliquely disposed relative to the ground. The oblique angle can directly reflect most of the light to the solar panels 22 to have a better power generation efficiency.

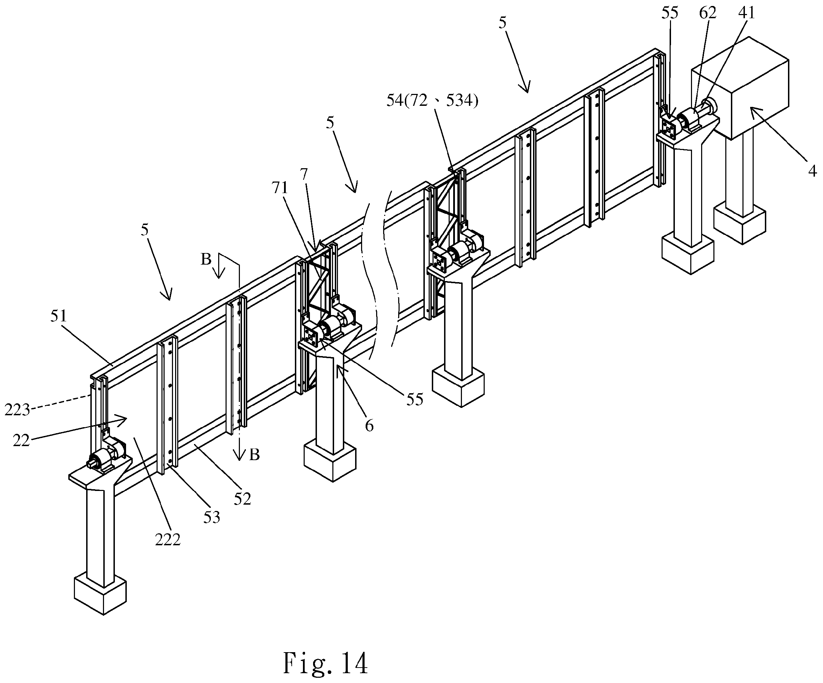

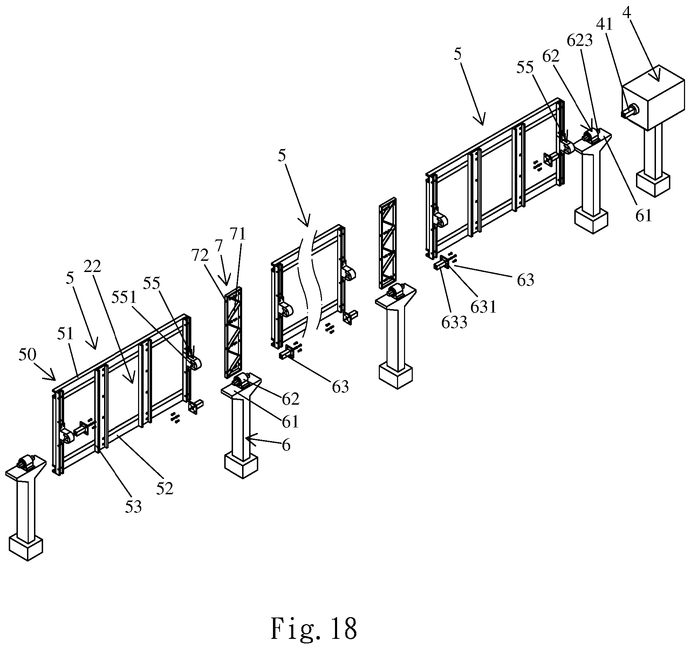

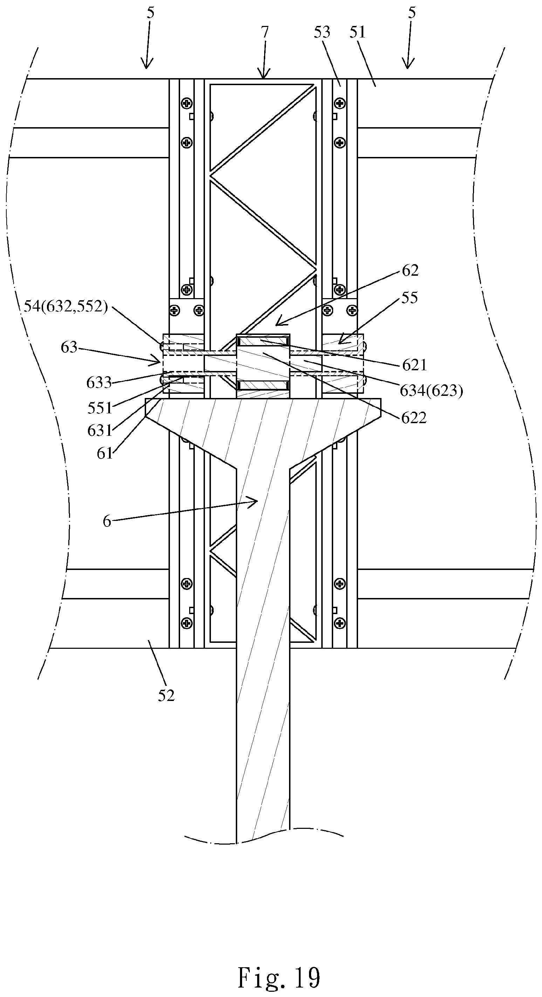

Please refer to FIGS. 14-20 which show the fifth embodiment of the present invention. The fifth embodiment is mounted on the greenhouse body, which is the same as the first embodiment. The main difference is the structure of the solar module and the column. The solar module 5 of the fifth embodiment includes a plurality of assembling frames 50 and a plurality of solar panels 22. A connecting portion 223 is disposed on a periphery of the solar panel 22, and mounting holes 224 are provided in the connecting portion 223.

The assembly frame 50 comprises a straight upper frame 51, a straight lower frame 52, a plurality of straight vertical frames 53, and a plurality of shaft coupling portions 55. The upper frame 51 and the lower frame 52 are arranged in parallel on the upper and lower sides of the solar panel 22, respectively, and a plurality of solar panels 22 is disposed consecutively between the upper frame 51 and the lower frame 52. The vertical frame 53 is disposed vertically relative to the upper frame 51 and the lower frame 52 and is provided with first through-holes 531 located corresponding to the mounting holes 224 of the connecting portion 223 on a side of the second light receiving surface 222 of the solar panel 22, and coupling elements 54 extend through the first through-holes 531 and the mounting holes 224 to fix the vertical frame 53 to the solar panel 22. The vertical frame 53 and the upper frame 51 are respectively provided with a third coupling hole 532 and a first coupling hole 511 at corresponding positions, the vertical frame 53 and the lower frame 52 are respectively provided with a fourth coupling hole 533 and a second coupling hole 521 at corresponding positions, and the two sets of coupling holes are respectively fixedly connected by coupling elements 54. In other embodiments, the vertical frame 53 may also be fixedly connected to the upper frame 51 and the lower frame 52 by welding or other methods. Furthermore, the shaft coupling portions 55 are mounted on the vertical frames 53 on two sides of the solar module 5 along the axial direction by coupling elements 54. In other embodiments, the shaft coupling portions 55 may also be fixedly mounted on the vertical frames 53 by welding. In this embodiment, the shaft coupling portion 55 has a square second through-hole 551 extending through the vertical frame 53 and is provided with several sixth coupling holes 552.

The post 6 of the fifth embodiment is vertically disposed relative to the ground and has a top end provided with a rectangular bearing platform 61. A bearing 62 is disposed on the center of the bearing platform 61. The bearing 62 includes a seat 621 and a shaft 622. The seat 621 is fixed on the bearing platform 61, and the shaft 622 can rotate in the seat 621 and includes two ends from which square connecting beams 623 protrude. Furthermore, a plurality of connecting blocks 63 is provided. The connecting block 63 has a connecting plate 631. The connecting plate 631 is provided with a seventh coupling hole 632 at a position corresponding to the sixth coupling hole 552 of the shaft coupling portion 55. A square coupling beam 633 protrudes from a side of the connecting plate 631 and can be inserted into the second through-hole 551 of the shaft coupling portion 55 and interlocked with the shaft coupling portion 55. The coupling beam 633 has a square fitting hole 634 that can couple with the connecting beam 623 and rotate jointly with the shaft 622. In other embodiments, the second through-hole 551, the connecting beam 623, the coupling beam 633, and the fitting hole 634 may also have other non-circular shapes or shapes that can achieve the purpose of interlocking, not limited to square shapes.

The connecting member 7 is a rectangular object with two sides corresponding to the length of the vertical frame 53 of the solar module 2 and has a reinforcing frame 71 at the center. In other embodiments, the connecting member 7 may also be a plate or other forms. Two sides of the connecting member 7 and the vertical frames 53 of adjacent solar modules 2 are respectively provided with eighth coupling holes 72 and fifth coupling holes 534 at corresponding positions and are assembled by coupling elements 54. Furthermore, the actuating end 41 of the actuating device 4 of this embodiment is interlocked with the shaft coupling portion 55.

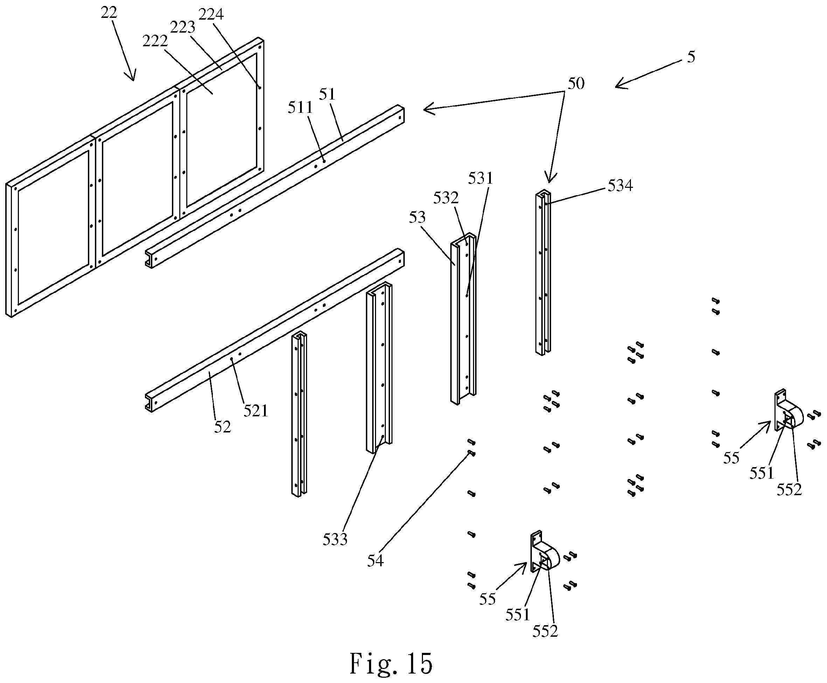

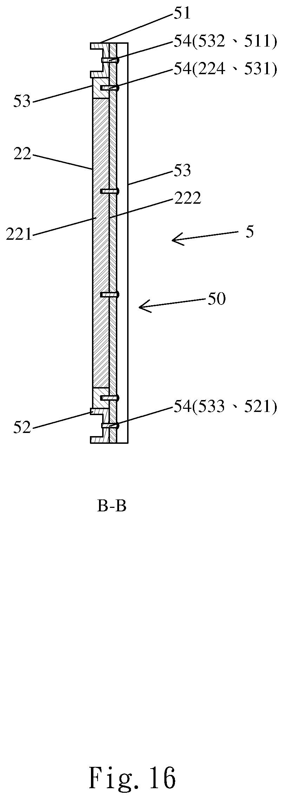

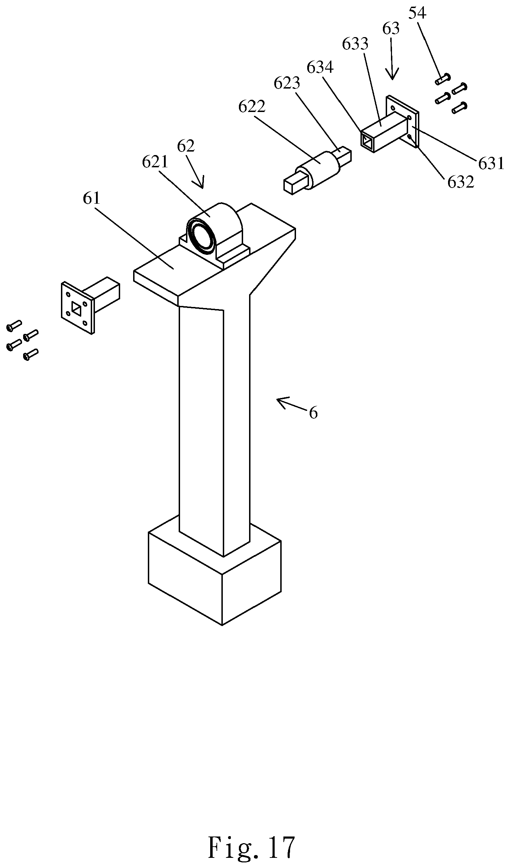

The present invention may be provided with an appropriate number of solar modules 5 according to the installation environment and power generation requirements. The solar modules 5 may be prefabricated as shown in FIG. 15 and FIG. 16. Furthermore, as shown in FIGS. 17-19, the posts 6 are mounted to predetermined positions on the top end of the greenhouse body (not shown) in advance, and the solar modules 5 can be hung so that the shaft coupling portions 55 are directly hung on the bearing platforms 61 of the posts 6, and the second through-holes 551 of the shaft coupling portions 55 correspond to the positions of the connecting beams 623 of the bearings 62. Furthermore, the coupling beam 633 of the connecting block 63 is inserted into the second through-hole 551, and the fitting hole 634 of the coupling beam 633 is coupled with the connecting beam 623. Furthermore, the coupling elements 54 are inserted into the seventh coupling holes 632 of the connecting blocks 63 and the sixth coupling holes 552 of the shaft coupling portions 55, and the shaft coupling portions 55 can be coupled with the shafts 622 of the bearings 62. Therefore, this embodiment is suitable for a crane which hangs the assembled solar modules 5 onto the supporting platforms 61 above the greenhouse body for further assembly, allowing rapid installation on site.

After the present invention is assembled, a connecting member 7 is mounted between two adjacent solar modules 5, and two sides of the connecting member 7 respectively abut against the vertical frames 53 of the two adjacent solar modules 5. Furthermore, coupling elements 54 are inserted through the eighth coupling holes 72 and the fifth coupling holes 534 to fix the two sides of the connecting member 7 to the two solar modules 5. The actuating device 4 is located at the outer end of the entire solar power generation apparatus, and the actuating end 41 is interlocked with the shaft coupling portion 55 to complete the assembly form shown in FIG. 14, allowing easy installation. Furthermore, the actuating device 4 is located outside the solar power generation apparatus, thereby having an effect of easy maintenance.

After the present invention is assembled, the centers of the first light receiving surfaces 221 and the second light receiving surfaces 222 of the solar panels 22 will not be covered by the assembling frames 50 or other components, such that the first and second light receiving surfaces 221 and 222 can receive light and generate power in a large area and have better power generation efficiency than the second embodiment shown in FIG. 10 in which the straight rod-shaped shaft coupling portion 215 covers a portion of the first light receiving surfaces 221.

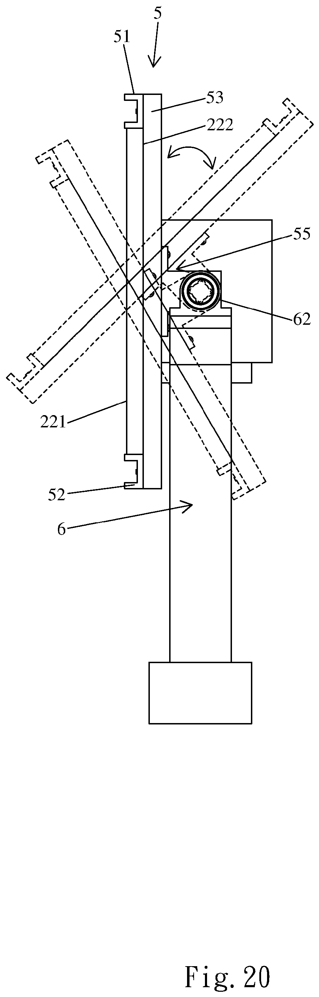

Please refer to FIG. 14 and FIG. 20. After the present invention is assembled, each solar module 5 can be stably supported by the supporting platform 61 of the post 6. Furthermore, when the actuating device 4 drives the connected solar module 5 to rotate, its rotational torque can be transmitted to the connecting member 7 with better strength, and then transmitted to another adjacent solar module 5 by the connecting member 7, and the rotational torque can be transmitted to other connecting members 7 and solar modules 5 in sequence. The side of the connecting member 7 is planar and abuts the side of the vertical frame 53 of the solar module 5. Therefore, when the solar module 5 at one end is driven to rotate by the shaft 622, other solar modules 5 can be stably interlocked to rotate synchronously, so that each solar module 5 can be synchronously adjusted to the same light receiving angle, having better adjustment stability.

When the solar module 5 of this embodiment rotates, its torque is mainly applied to the connecting member 7, which can reduce the load on the shaft 622. Furthermore, the force on the shaft 622 can be transmitted to the connecting block 63 and the shaft coupling portion 55, which can disperse the force and enhance the smoother rotation of the solar module 5. Therefore, this embodiment can provide more solar modules 5 connected in series to synchronously drive all solar modules 5 to rotate and can have better rotation stability than the direct connection structure of the shaft coupling portions of adjacent solar modules in the first embodiment.

Therefore, as described above, the present invention has effects of easy installation, extendable to the required area for receiving light and generating power, better power generation efficiency, and better stability in angle adjustment. Furthermore, the aforementioned embodiments are examples of the present invention, not limitations to the present invention. All equivalent changes made in accordance with the present invention should also fall within the scope of the present invention.

## Claims

1. A greenhouse solar power generation apparatus, **characterized by** comprising:
at least one greenhouse body including a roof frame, with a roofing material disposed on the roof frame;
a plurality of solar modules including a plurality of assembling frames and a plurality of solar panels, with the assembling frames disposed on an upper end of an outer side of a top portion of the greenhouse body along a front/rear direction and provided with a shaft coupling portion, with the solar panels having light receiving surfaces for receiving light and generating power and disposed in series on one of the assembling frames to form a solar module, and with the plurality of solar modules connected in series to move jointly;
a plurality of posts whose lower ends are connected to the greenhouse body and whose upper ends are connected to the shaft coupling portion of the assembling frame;
at least one actuating device interlocked with the solar modules and used to drive the solar modules to rotate, enabling the solar panels to be in different angles relative to the ground.

2. The greenhouse solar power generation apparatus according to claim 1, **characterized in that** two outer surfaces of the solar panel have a first light receiving surface and a second light receiving surface for receiving light and generating power.

3. The greenhouse solar power generation apparatus according to claim 2, **characterized in that** the greenhouse body includes a plurality of columns, a horizontal frame in the front/rear direction is disposed on upper ends of the columns, the roof frame is coupled with the horizontal frame and is disposed on a side of an upper end of the horizontal frame, the posts are vertically disposed on top of the horizontal frame, and bottoms of the posts are fixed to the horizontal frame.

4. The greenhouse solar power generation apparatus according to claim 3, **characterized in that** the assembling frame includes a straight upper frame and a straight lower frame which are parallel to each other, a plurality of connecting plates, and a plurality of shaft coupling portions, the upper frame and the lower frame are connected by the connecting plates, and installation spaces for mounting the plurality of serially disposed solar panels are provided between the upper frame, the lower frame, and the connecting plates, a pivot seat is disposed on the upper end of the post, the shaft coupling portions are disposed on central positions of front and rear ends of the assembling frame and are coupled with the pivot seats, and the shaft coupling portions of adjacent assembling frames are coaxially connected in series to enable the plurality of assembling frames to rotate jointly.

5. The greenhouse solar power generation apparatus according to claim 4, **characterized in that** an assembling portion protrudes from a side of the connecting plate, the shaft coupling portion is a straight rod, and the shaft coupling portion is coupled with a plurality of assembling portions and is disposed on a side corresponding to the light receiving surface of the solar panel.

6. The greenhouse solar power generation apparatus according to claim 1, **characterized in that** at least one light-reflecting shielding reflective material is disposed below the roof frame of the greenhouse body.

7. The greenhouse solar power generation apparatus according to claim 1, **characterized by** further comprising at least one connecting member, with the connecting member disposed between two adjacent solar modules.

8. The greenhouse solar power generation apparatus according to claim 7, **characterized in that** the assembling frame includes an upper frame, a lower frame, a plurality of vertical frames, and a plurality of shaft coupling portions, the upper frame and the lower frame are arranged in parallel on upper and lower sides of the solar panel respectively, and a plurality of solar panels are disposed consecutively between the upper frame and the lower frame, the vertical frame is disposed vertically relative to the upper frame and the lower frame, the shaft coupling portions are disposed on the vertical frames on two sides of the solar module along an axial direction, the connecting member is disposed between the vertical frames of two adjacent solar modules, and two sides of the connecting member abut against and are fixedly connected with two vertical frames.

9. The greenhouse solar power generation apparatus according to claim 8, **characterized in that** a connecting portion is disposed on a periphery of the solar panel, the connecting portion is provided with a mounting hole, a through-hole is provided on the vertical frame corresponding to a position of the mounting hole of the solar panel, and a coupling element extends through the through-hole and the mounting hole to fix the vertical frame to the solar panel, and upper and lower ends of the vertical frame are respectively fixed to the upper frame and the lower frame.

10. The greenhouse solar power generation apparatus according to claim 7, **characterized in that** a center of the shaft coupling portion has a non-circular through-hole, a supporting platform is disposed on a top end of the post, a bearing is disposed at a center of the supporting platform, the bearing includes a seat and a shaft, the seat is fixed on the supporting platform, the shaft is rotatable in the seat, connecting beams protrude from two ends of the shaft, the bearing includes a plurality of connecting blocks, the connecting block includes a connecting plate coupled with the shaft coupling portion, a coupling beam protrudes from a side of the connecting plate, extends through the through-hole of the shaft coupling portion, and is interlocked with the shaft coupling portion, the coupling beam has a fitting hole coupled with the connecting beam and jointly rotatable with the shaft.
